# EUROPÄISCHE PATENTANMELDUNG

(11) **EP 1 500 814 A1**
(43) Veröffentlichungstag der Anmeldung: **26.01.2005**
(21) Anmeldenummer: 04016618.3
(22) Anmeldetag: 15.07.2004
(51) Int. Cl.: F03D 1/06

(54) **Windturbinenrotorflügel mit Flügelendfortsatz**

(30) Priorität: 19.07.2003 DE 10332875
(71) Anmelder: Natenco Natural Energy Corporation GmbH, 72649 Wolfschlugen (DE)
(72) Erfinder: Balz, Willi, Dipl.-Wirt.-Ing., 72649 Wolfschlugen (DE); Weiblen, Frank Hermann, Dipl.-Ing., 73765 Neuhausen a.d.F. (DE)
(74) Vertreter: Grosse, Rainer

(57) **Zusammenfassung**

Die Erfindung betrifft ein Rotorflügelblatt (6) eines Rotors (21) einer Windkraftanlage, mit einem aerodynamischen Flügelendfortsatz (7). Es ist vorgesehen, dass dessen Fortsatzebene (10) gegenüber der angrenzenden Flügelblattebene (9) unter einem Winkel (α) geneigt verläuft.

## Beschreibung

Die Erfindung betrifft ein Rotorflügelblatt eines Rotors einer Windkraftanlage.

Derartige Rotorflügelblätter sind vorzugsweise zu mehreren, winkelversetzt zueinander, an einer Nabe angeordnet. Sie führen zu einer Drehbewegung zur Erzeugung elektrischer Energie. Die Drehbewegung entsteht durch Windbeströmung der Rotorflügelblätter. Bekannte Rotorflügelblätter können im Betrieb durch die Windanströmung störende Geräusche erzeugen. Ferner stellen sie ein grundsätzlich nicht vermeidbaren Strömungswiderstand dar.

Der Erfindung liegt die Aufgabe zugrunde, ein Rotorflügelblatt anzugeben, dass ohne Leistungseinbuße einen verminderten Strömungswiderstand aufweist und vorzugsweise überdies geräuschvermindert arbeitet.

Diese Aufgabe wird gelöst mittels eines aerodynamischen Flügelendfortsatzes, dessen Fortsatzebene gegenüber der angrenzenden Flügelblattebene unter einem Winkel geneigt verläuft. Fortsatzebene und Flügelblattebene schließen somit einen Winkel ein, d.h., bei einem Blick entlang der Längsachse des Rotorflügelblatts zeigt sich, dass die Längsachse des Flügelendfortsatzes gegenüber der Längsachse des übrigen Rotorflügelblatts unter einem Winkel geneigt verläuft. Der Flügelendfortsatz bildet ein so genanntes "Winglet", das die aerodynamischen Eigenschaften des Rotorflügelblatts im Bereich seines freien Endes derart positiv aufgrund des geneigten Verlaufes des Flügelendfortsatzes beeinflusst, dass es bei gleicher oder erhöhter Leistungsabgabe zu einer Verminderung des Strömungswiderstandes und auch zur Geräuschverminderung kommt. Damit ergibt sich eine Verbesserung der aerodynamischen Wirksamkeit des Rotorflügelblattes, insbesondere auch im Blattaußenbereich. Dies gilt umso mehr, wenn das Rotorflügelblatt eine so genannte Tip-Bremse aufweist, d.h., ein Element an der Spitze, das bei Auslösung zu einer Abbremsung der Drehzahl führt. Ist der Flügelendfortsatz vorgesehen, so können dadurch Spalte zur Tip-Bremse vermieden werden, die widerstandsungünstig durchströmt würden.

Nach einer Weiterbildung der Erfindung ist vorgesehen, dass der Flügelendfortsatz ein aerodynamisches Querschnittsprofil aufweist. Ebenso wie das übrige Rotorflügelblatt weist somit das Winglet ebenfalls eine Querschnittsstruktur auf, die ein aerodynamisches Profil besitzt.

Ferner ist es von Vorteil, wenn der Flügelendfortsatz zur Oberseite des Rotorflügelblatts hin geneigt angeordnet ist. Alternativ ist es jedoch auch möglich, dass der Flügelendfortsatz zur Unterseite des Rotorflügelblatts hin geneigt angeordnet ist. Der Neigungswinkel liegt in einem Bereich, der einerseits durch eine nicht fluchtende Anordnung von Flügelendfortsatz und angrenzendem Rotorflügelblatt gekennzeichnet ist, bis zu einem Winkel von 90° zwischen diesen beiden Elementen. Der Winkel kann bis zu plus 90° oder bis zu minus 90° groß sein, je nach dem, ob der Flügelendfortsatz zur Oberseite oder zur Unterseite des Rotorflügelblatts hin geneigt angeordnet ist.

Nach einer Weiterbildung der Erfindung ist vorgesehen, dass der Flügelendfortsatz zumindest über eine Teillänge eine kleinere Flügeltiefe als der angrenzende Bereich des Rotorflügelblatts aufweist. Mithin ist der Flügelendfortsatz schmaler ausgestaltet oder bereichsweise schmaler ausgestaltet als das angrenzende Rotorflügelblatt. Insbesondere kann auch vorgesehen sein, dass der Rotorendfortsatz zu seinem freien Ende hin in dem Maß seiner Flügeltiefe abnimmt, dass Ende also zugespitzt verläuft, wobei es nicht in einer punktförmigen Spitze enden muss, sondern auch abgeflacht sein kann. Bis in eine punktförmige Spitze auslaufende Winglets sind jedoch auch denkbar.

Insbesondere ist vorgesehen, dass der Flügelendfortsatz asymmetrisch zur Rotorflügelblatt-Längsmittelachse ausgebildet ist. Die Asymmetrie kann in Drehrichtung voreilend oder in Drehrichtung rückeilend bestehen, d.h., der Flügelendfortsatz ist gegenüber der Rotorflügelblatt-Längsmittelachse versetzt angeordnet. Alternativ ist jedoch auch eine symmetrische Ausgestaltung denkbar.

Ferner kann vorgesehen sein, dass der Übergangsbereich von Flügelendfortsatz und angrenzendem Bereich des Rotorflügelblatts bezüglich der Fortsatzebene und der Flügelblattebene bogenförmig oder knickförmig ausgebildet ist. Bei einer bogenförmigen Anbindung erfolgt ein gekrümmt-kontinuierlicher Übergang zwischen den beiden Elementen; bei der knickförmigen Ausgestaltung ändert sich die Flügelebene abrupt.

Das Rotorflügelblatt kann mit einer Vorpfeilung oder einer Rückpfeilung versehen sein. Dies bedeutet, dass das Rotorblatt entlang seiner Längserstreckung keinen geradlinigen Verlauf aufweist, sondern einen abgeknickten Verlauf, wobei von "Vorpfeilung" geredet wird, wenn das abgeknickte freie Ende in Drehrichtung weist und von "Rückpfeilung", wenn das abgeknickte freie Ende entgegen die Drehrichtung zeigt. Die Vorpfeilung oder Rückpfeilung ist zusätzlich zum Flügelendfortsatz ausgebildet.

Schließlich ist von Vorteil, wenn das Rotorflügelblatt im Knickbereich der Vorpfeilung oder Rückpfeilung eine Änderung in dem Maß der Flügeltiefe aufweist. Hierdurch werden vorteilhafte aerodynamische Eigenschaften erzielt, insbesondere dann, wenn der sich an die Abknickung anschließende, dem freien Ende zugewandte Abschnitt des Rotorflügelblatts eine größere Flügeltiefe aufweist, als der Abschnitt des Rotorflügelblatts, der der Nabe zugeordnet ist. Es sind auch mehrfach geknickte Vorpfeilungen oder Rückpfeilungen möglich.

Die Zeichnungen veranschaulichen die Erfindung anhand von Ausführungsbeispielen und zwar zeigt:
- Figur 1: eine Seitenansicht auf einen Endabschnitt eines Rotorflügelblatts,
- Figur 2: eine Draufsicht auf einen Endabschnitt eines Rotorflügelblatts,
- Figur 3: eine weitere Ausführungsform entsprechend der Darstellung der Figur 2,
- Figur 4: eine Rückpfeilung eines Rotorflügelblatts,
- Figur 5: eine Vorpfeilung eines Rotorflügelblatts,
- Figur 6: ein weiteres Ausführungsbeispiel einer Vorpfeilung eines Rotorflügelblatts und
- Figuren 7 bis 9: verschiedene, schematische Darstellungen betreffend die Drehebenen von unterschiedlichen Rotorflügelblättern.

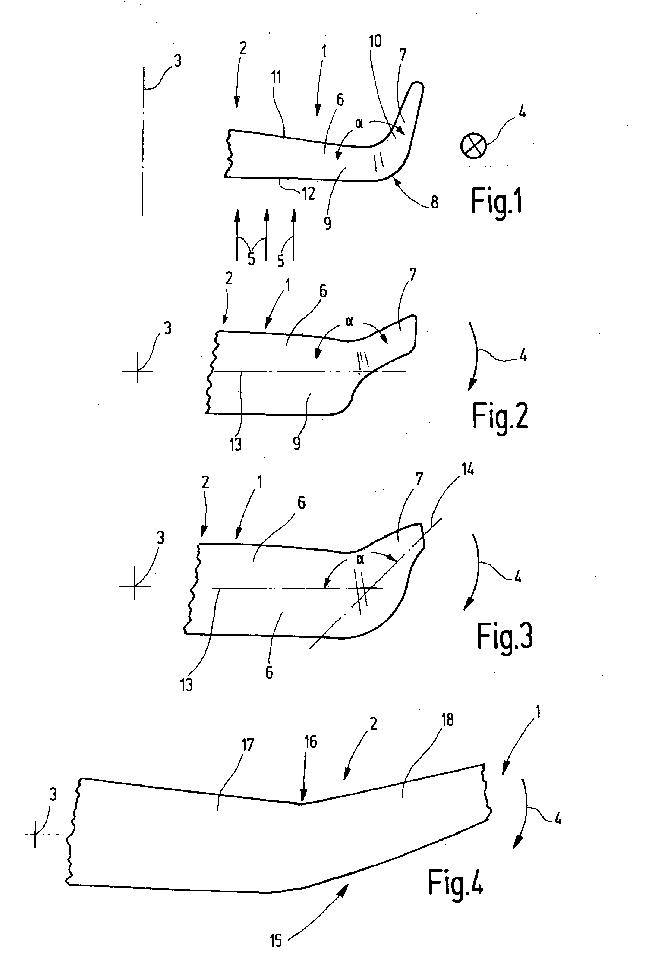

Die Figur 1 zeigt den freien Endbereich 1 eines nicht vollständig gezeichneten Rotorflügelblatts 2. Das Rotorflügelblatt 2 rotiert durch Windanströmung um eine nicht dargestellte Nabe, die eine Drehachse 3 aufweist. Beim Ausführungsbeispiel der Figur 1 erfolgt die Drehung gemäß Pfeil 4 in die Zeichenebene hinein, d.h., von der Windrichtung 5 her betrachtet, im Uhrzeigersinn.

Das Rotorflügelblatt 2 weist einen Flügelblattendbereich 6 auf, der bis zu einem Flügelendfortsatz 7 verläuft. Der Flügelendfortsatz 7 verläuft abgewinkelt zum Flügelblattendbereich 6. Diese beiden Elemente stoßen in einem Übergangsbereich 8 aneinander, wobei dieser Übergangsbereich bogenförmig gestaltet ist. Alternativ ist es auch denkbar, dass der Übergangsbereich knickförmig ausgestaltet ist. Betrachtet man die Flügelblattebene 9 des Flügelblattendbereichs 6 in Relation zur Fortsatzebene 10 des Flügelendfortsatzes 7, so ist erkennbar, dass diese beiden Ebenen einen Winkel α von etwa 80° einschließen. Da -in Bezug auf die Windrichtung 5- der Flügelendfortsatz 7 in Richtung auf die Unterseite 11 des Rotorflügelblatts 2 abgewinkelt ist, kann dieser Winkel als negativer Winkel, also minus 80°, bezeichnet werden. Alternativ ist es selbstverständlich auch möglich, dass ein positiver Winkel α vorliegt (nicht dargestellt), d.h., der Flügelendfortsatz 7 ist in Richtung auf die Oberseite 12 des Rotorflügelblatts 2 abgewinkelt, er weist damit in eine Richtung entgegengesetzt zur Windrichtung 5.

Der Winkel α kann als positiver oder negativer Winkel vorzugsweise im Bereich von 90° bis < 180° liegen (180° erreicht der Winkel α nicht, da dann der Flügelendfortsatz 7 fluchtend zum Flügelblattendbereich 6 verlaufen würde und nicht den erfindungsgemäß gewünschten, geneigten Verlauf aufwiese).

Die Figur 2 zeigt ein weiteres Ausführungsbeispiel der Erfindung, wobei die Drehachse 3 senkrecht auf der Zeichnungsebene steht und der Flügelblattendbereich 6 entsprechend Pfeil 4 in der Zeichnungsebene dreht. Gleiches gilt für die später noch abzuhandelnden Darstellungen der Figuren 3 bis 6.

Gemäß Figur 2 ist der gegenüber der Flügelblattebene 9 abgewinkelte Flügelendfortsatz 7 asymmetrisch zur Rotorflügelblatt-Längsmittelachse 13 ausgestaltet, derart, dass er -gegenüber der Drehrichtung (Pfeil 4)- nacheilend angeordnet ist.

Beim Ausführungsbeispiel der Figur 3 liegt eine symmetrische Ausgestaltung des Flügelendfortsatzes 7 zur Rotorflügelblatt-Längsmittelachse 13 vor, wobei dies aus der Zeichnung aufgrund des entsprechenden Blickwinkels nicht eindeutig erkennbar ist. Zur Verdeutlichung des Winkels α zwischen dem Flügelblattendbereich 6 und dem Flügelendfortsatz 7 ist dem Flügelendfortsatz 7 eine Längsmittellinie 14 zugeordnet worden, die mit der Rotorflügelblatt-Längsmittelachse 13 den Winkel α bildet.

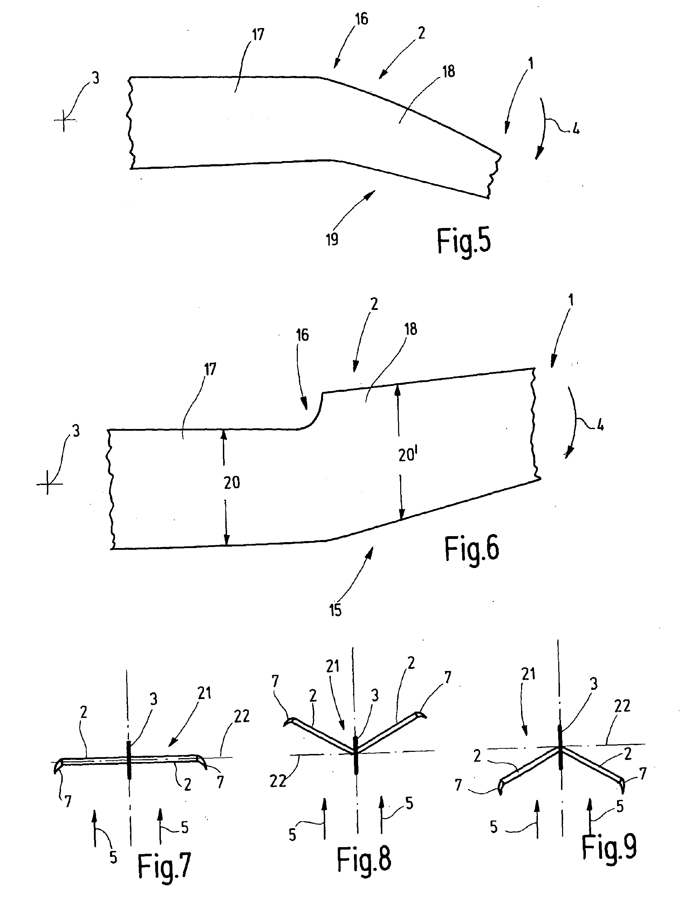

Das Rotorflügelblatt 2 kann -zusätzlich zu der Ausbildung des Flügelendfortsatzes 7- mit einer Vorpfeilung oder einer Rückpfeilung versehen sein. Die Figur 4 verdeutlicht eine Rückpfeilung 15, die dadurch gekennzeichnet ist, dass im Bereich von der Drehachse 3 zum in der Figur 4 nicht im Detail angegebenen Endbereich 1 ein Knick im Verlauf des Rotorflügelblatts 1 entgegen der Drehrichtung (Pfeil 4) vorliegt. Der Knickbereich ist mit dem Bezugszeichen 16 gekennzeichnet; er besteht zwischen dem Blattbereich 17 und dem Blattbereich 18.

Im Gegensatz zum Ausführungsbeispiel der Figur 4 ist beim Ausführungsbeispiel der Figur 5 eine Vorpfeilung 19 zwischen dem Blattbereich 17 und dem Blattbereich 18 vorgesehen. Der Blattbereich 18 eilt -in Drehrichtung (Pfeil 4) gesehen- dem Blattbereich 17 vor.

Das Ausführungsbeispiel der Figur 6 entspricht dem Ausführungsbeispiel der Figur 4, zeigt also eine Rückpfeilung 15, wobei in dem Knickbereich 16 jedoch ein Sprung in dem Maß der Flügeltiefe erfolgt. Die Flügeltiefe 20 des Blattbereichs 17 ist kleiner als die Flügeltiefe 20' im Blattbereich 18 ausgebildet. In einem nicht dargestellten Ausführungsbeispiel kann dies auch umgekehrt der Fall sein, d.h., der der Drehachse 3 näher liegende Blattbereich 17 kann eine größere Flügeltiefe als der weiter zum Blattende angeordnete Blattbereich 18 aufweisen. Stets ist jedoch dabei vorgesehen, dass die Flügelblattspitze mit einem Flügelendfortsatz 7 (Winglet) ausgestattet ist.

Die Figuren 7 bis 9 zeigen eine weitere Besonderheit. Schematisch dargestellt ist jeweils ein Rotor 21 mit zwei, einander diametral gegenüberliegenden Rotorflügelblättern 2. Der Rotor 21 rotiert um die Drehachse 3, zu der rechtwinklig die Drehebene 22 verläuft. Erstrecken sich die Rotorflügelblätter 2 in der Drehebene 22, d.h., stehen die Rotorflügelblätter 2 senkrecht auf der Drehachse 3, so ergibt sich die aus der Figur 7 hervorgehende Darstellung. An den Enden tragen die Rotorflügelblätter 2 jeweils Flügelendfortsätze 7.

Die Figur 8 verdeutlicht, dass die Rotorflügelblätter 2 nicht in der Drehebene 22 rotieren müssen, sondern -gegenüber der Windrichtung 5- hinter der Drehebene liegen, so dass sie entlang in einer Kegelmantelfläche rotieren. Die Rotorflügelblätter 2 sind somit nach Lee geneigt. Alternativ ist es gemäß Figur 9 möglich, dass die Rotorflügelblätter in Luv-Richtung geneigt sind, sie also -in Windrichtung 5 gesehen- vor der Drehebene 22 liegen, wobei die Drehebene 22 derart definiert ist, dass sie senkrecht auf der Drehachse 3 steht. Die Rotorflügelblätter 2 bewegen sich beim Ausführungsbeispiel der Figur 5 ebenfalls entlang einer Kegelmantelfläche.

Im Zuge dieser Anmeldung sind verschiedene Ausführungsformen erläutert und/oder in den Zeichnungen verdeutlicht worden. Es wird hiermit ausdrücklich erklärt, dass die verschiedenen Ausgestaltungen auch in beliebiger Art und Weise miteinander kombiniert werden können, also symmetrische und asymmetrische Winglets mit größeren oder kleineren Flügeltiefen, Vor- oder Rückpfeilungen, positiven oder negativen Winkeln der Flügelendfortsatzlage und so weiter, so dass jedes der Einzelmerkmale mit jedem anderen Einzelmerkmal oder einer Gruppe von anderen Einzelmerkmalen kombiniert werden kann.

## Patentansprüche

1. Rotorflügelblatt (2) eines Rotors (21) einer Windkraftanlage, mit einem aerodynamischen Flügelendfortsatz (7), dessen Fortsatzebene (10) gegenüber der angrenzenden Flügelblattebene (9) unter einem Winkel (α) geneigt verläuft.

2. Rotorflügelblatt nach Anspruch 1, **dadurch gekennzeichnet, dass** der Flügelendfortsatz (7) ein aerodynamisches Querschnittsprofil aufweist.

3. Rotorflügelblatt nach einem der vorhergehenden Ansprüche, **dadurch gekennzeichnet, dass** der Flügelendfortsatz (7) zur Oberseite (12) des Rotorflügelblatts (2) hin geneigt angeordnet ist.

4. Rotorflügelblatt nach einem der vorhergehenden Ansprüche, **dadurch gekennzeichnet, dass** der Flügelendfortsatz (7) zur Unterseite (11) des Rotorflügelblatts (2) hin geneigt angeordnet ist.

5. Rotorflügelblatt nach einem der vorhergehenden Ansprüche, **dadurch gekennzeichnet, dass** der Flügelendfortsatz (7) zumindest über eine Teillänge eine kleinere Flügeltiefe als der angrenzende Bereich (6) des Rotorflügelblatts (2) aufweist.

6. Rotorflügelblatt nach einem der vorhergehenden Ansprüche, **dadurch gekennzeichnet, dass** der Flügelendfortsatz (7) zum freien Ende hin in dem Maß seiner Flügeltiefe abnimmt.

7. Rotorflügelblatt nach einem der vorhergehenden Ansprüche, **dadurch gekennzeichnet, dass** der Flügelendfortsatz (7) asymmetrisch zur Rotorflügelblatt-Längsmittelachse (13) ausgebildet ist.

8. Rotorflügelblatt nach einem der vorhergehenden Ansprüche, **dadurch gekennzeichnet, dass** der Übergangsbereich (8) von Flügelendfortsatz (7) und angrenzendem Bereich (6) des Rotorflügelblatts (2) bezüglich der Fortsatzebene (10) und der Flügelblattebene (9) bogenförmig oder knickförmig ausgebildet ist.

9. Rotorflügelblatt nach einem der vorhergehenden Ansprüche, **gekennzeichnet durch** eine Vorfeilung (19) oder eine Rückfeilung (15).

10. Rotorflügelblatt nach einem der vorhergehenden Ansprüche, **dadurch gekennzeichnet, dass** das Rotorflügelblatt (2) im Knickbereich der Vorfeilung (19) oder Rückfeilung (15) eine Änderung in dem Maß der Flügeltiefe (20,20') aufweist.
